# EUROPEAN PATENT APPLICATION

(11) **EP 4 169 380 A1**
(43) Date of publication of application: **26.04.2023**
(21) Application number: 21826038.8
(22) Date of filing: 14.06.2021
(51) Int. Cl.: A01N 33/08, A01P 15/00

(54) **AGRICULTURAL COMPOSITION FOR THE TREATMENT AND PREVENTION OF BACTERIAL DISEASES AND DISORDERS**

(30) Priority: 17.06.2020 US 202016903770
(71) Applicant: Amazon Agrosciences Ltda, São Carlos (SP) 13564-610 (BR); Instituto Agronômico de Campinas - IAC, 13075-630 Campinas - São Paulo (BR); Ciacamp Desenvolvimento e Inovação Tecnológica Ltda, Araras - SP 13607-592 (BR)
(72) Inventor: DE SOUZA DELLA COLETTA, Alessandra Alves, 13490-000 Cordeirópolis (BR); DELLA COLETTA FILHO, Helvecio, 13490-000 Cordeirópolis (BR); TAKITA, Marco Aurelio, 13604-232 Araras (BR); MACHADO, Marcos Antonio, 13084-700 Campinas (BR); MURANAKA, Lígia Segatto, 13500-030 Rio Claro (BR); PICCHI, Simone Cristina, 13607-592 Araras (BR)
(74) Representative: Ungria López, Javier
(86) International application number: PCT/BR2021/050257
(87) International publication number: WO 2021/253105

(57) **Abstract**

Disclosure is provided for agricultural compositions for effective disruption of bacterial biofilms, for the treatment and preventing of bacterial diseases and disorders. The present invention also provides methods for the treatment and of prevention in a plant or plant part thereof, comprising applying to the plant or plant part said agricultural composition.

## Description

### FIELD OF THE INVENTION

The present disclosure provides agricultural compositions and methods for the effective treatment of bacterial diseases and disorders, disrupting bacterial colonies, reducing the oxidative stress, and capturing the free radicals. More specifically, the present disclosure relates to the plant defense inducer compositions, and to their use for improving certain aspects of the plant, including treating plant disease, improving the ability of plants to fight itself the disease, reducing disease symptoms, controlling and treating bacterial disease. The bacterial diseases can be Huanglongbing disease (hereinafter HLB) or greening, citrus variegated chlorosis disease (hereinafter CVC), and citrus canker (hereinafter CCK).

### BACKGROUND OF THE INVENTION

Citrus is an economically important crop for at least 140 countries and the United States Department of Agriculture estimated that the global orange production during 2018/2019 was 47.5 million metric tons.

However, citrus production is constantly threatened by pathogens that cause considerable losses and severe economic impacts.

Among the major citrus diseases, are Huanglongbing (HLB), citrus variegated chlorosis (CVC), and citrus canker (CCK), caused by members of the bacterial species. Diseases caused by bacteria are responsible for 20% of agricultural losses and, therefore, there is a great need for innovative products, and technologies to control those diseases and reduce losses.

Therefore, diseases that affect citrus orchards, such as Citrus Variegated Chlorosis (CVC), caused by *Xylella fastidiosa* (Bové & Ayres, 2007), Citrus canker caused by *Xanthomonas citri subsp. citri* (Brunings & Gabriel, 2003) and Huanglongbing (HLB) or greening, caused by the bacterium *Candidatus Liberibacter* (Coletta-Filho, et al. 2004) have been the great challenge for the citrus sector, which requires effective products for the control of these diseases.

Huanglongbing (HLB), commonly known as citrus "greening" disease is caused by a partially systemic bacterial infection of citrus trees and other crop species, leading to leaf discoloration and affecting tree health as well as fruit development, ripening, and quality of citrus fruits and juice.

Currently, Huanglongbing (HLB) is the most serious citrus disease, which affects the longevity and productivity of citrus orchards, strongly impacting the global citrus industry. The main effects of such disease are the flow decreases of nutrients, making the affected trees do not reach production, and mature one, in production, will suffer a big fall of premature fruits and will languish over time. The disease impairs the ability of the mature tree properly produce resulting in smaller fruits, with deformities and, eventually, bitter taste, which compromises the standard of production quality.

The psyllid takes the bacteria into its body when it feeds on bacteria-infected plants. The disease spreads when a bacteria-carrying psyllid flies to a healthy plant and injects bacteria into it as it feeds.

It is well established that Huanglongbing is associated with the presence of the gram-negative bacteria genus *Candidatus Liberibacter* (CL).

The current strategy to fight HLB is the chemical control of the psyllids, associated with the location and removal of infected trees. Its efficacy is limited and, up to now, no conventional measure has provided consistent and effective suppression of the disease.

Due to its rapid dissemination and severity, Huanglongbing (HLB), is undoubtedly the citrus disease that has most challenged the sector (production, extension, and research) in the State of São Paulo, that is part of the Brazilian citrus belt, one of the world's largest citrus-producing region. The main causal agent of HLB in São Paulo citrus culture is the bacterium, Candidatus Liberibacter asiaticus (CLas), which is characterized by being intracellular with occurrence restricted to the vessels riddled with the phloem of host plants and is not routinely cultivable in the laboratory, until the present moment (Machado et al., 2010).

HLB is considered the most devastating citrus disease worldwide. According to the U.S. Department of Agriculture's (USDA) National Institute of Food and Agriculture (NIFA), the economic impact of the citrus greening disease is measured in the billions. Since 2005, the HLB has affected the citrus-production from Florida resulting in a 75% decline in the citrus industry.

It is also stated by the U.S. Department of Agriculture's (USDA) that orange production in the state of Florida has had a faster decline in the past five years due to the HLB, which has decimated orchards and increased costs for their maintenance. In 2000, the citrus orchards occupied 394 thousand hectares and, currently, the orchards occupy about 110 thousand hectares. In terms of fruits average production, in 2012 the state harvested about 175 million boxes. In 2018, the harvest was between 75 and 80 million boxes. Furthermore, other important citrus-producing areas deal with the same problem. For example, according to data from the Brazilian Agricultural Defense Coordination (CDA), approximately 50 million plants have already been eradicated due to the HLB since the beginning of the surveys in 2007 (CDA, 2016), that is, 26% of the 191.69 million of citrus trees cultivated in the State of São Paulo. This type of management has caused economic impacts, in addition to environmental ones, leading many citrus growers to abandon the activity or abandon the eradication of infected plants.

The citrus variegated chlorosis (CVC) is a disease that affects sweet orange orchards and can be found in all citrus-producing states in Brazil (Coleta-Filho & de Souza, 2014). Although this subspecies has yet to be found in the United States, other subspecies of the causal agent are present in the country, Some hosts are known for example, as other subspecies of this bacterium cause Pierce's disease in grapes and other scorch-type diseases in plants such as coffee and almond.

The citrus canker (CCK) causes lesions on leaves and fruit. The bacteria enter leaves mainly through stomata and wounds. CCK management has been based on both tree eradication and copper-based products.

The control of CVC is, practically, based on the insect vectors control (leafhoppers) with repeated insecticidal applications, while for HLB, the only existing alternative is the eradication of symptomatic trees and the insecticidal control of psyllids. These measures are limited, harm the profit margin available to producers.

Currently, most of the worldwide technologies used in agribusiness cause damage to the environment. They are toxic chemical molecules whose residues are incorporated into food, soil, and water.

Hence, new approaches are urgently required to improve citrus production. Thus, there is a need to effectively treat bacterial diseases.

### SUMMARY OF THE INVENTION

The present disclosure relates to an agricultural composition for the effective treatment of bacterial disease and disorders, disrupting bacterial colonies, reducing the oxidative stress, and capturing the free radicals, for treating and preventing citrus disease and disorders.

The present disclosure also relates to a method for the effective treatment of disrupting bacterial colonies, reducing the oxidative stress, and capturing the free radicals in a plant or plant part.

The compositions encompass solid and liquid compositions comprising N-acetyl-cysteine compounds, analogs, and combinations thereof as an active ingredient, fertilizers, and agriculturally acceptable carrier. Optionally, the agricultural composition may also have microbicide, a bacteriophage, or a plant defense activator.

### BRIEF DESCRIPTION OF FIGURES

The accompanying Figures described herein are used to provide a further understanding of the present disclosure. The illustrative embodiments and description thereof are merely exemplary and do not limit the present disclosure. In the accompanying figures:
Figures 1: Refer to plants showing HLB (greening) symptoms that received the composition of the present invention, wherein:
   Figure 1A: This graph presenting a quantitative bacterial population study at 5 and 7 months of treatment with the composition of the present invention depicting the reduction of the bacterial population in orange plants treated for five months, (blue bar) and seven months (orange bar) with the composition of the present application in three areas A1: area 1; A2: area 2; A3: area 3.
   Figure 1B: is a graph showing the bacterial quantification and callose evaluated in plants with symptoms of bacterial diseases and treated with the composition of the present invention from March to December, wherein March corresponds to the fifth month of application/treatment. Average of 10 leaves per assessment.
   Figure 1C shows the reduction of callose by microscopic images of cross-sections of leaf petioles treated with the composition of the present invention from March to December, wherein March corresponds to the fifth month of application/treatment.
Figures 2: Refer to plants with citrus canker disease (CCK) that received the composition of the present invention, wherein:

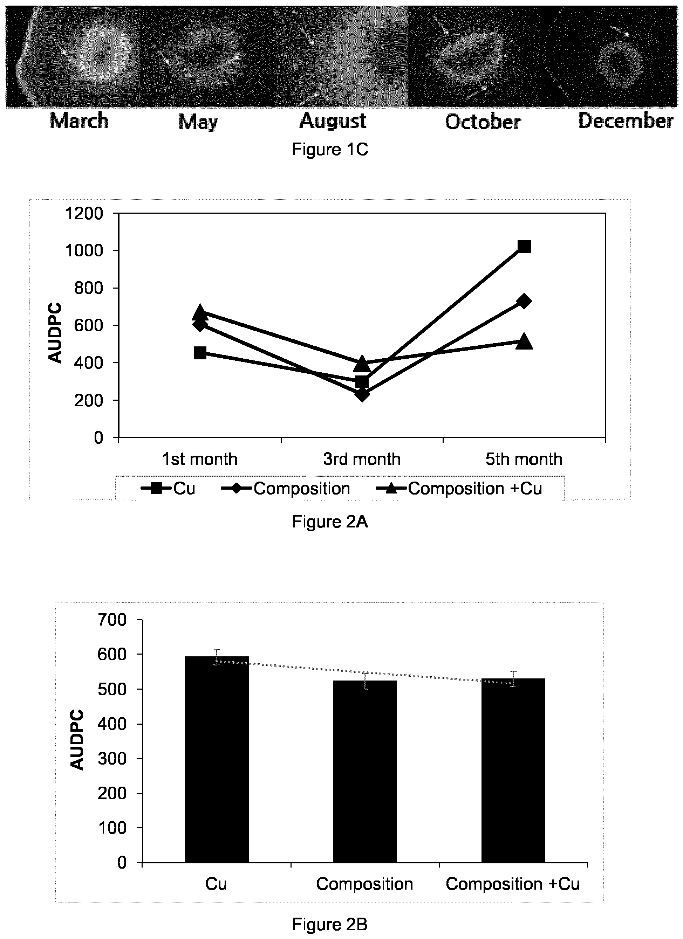

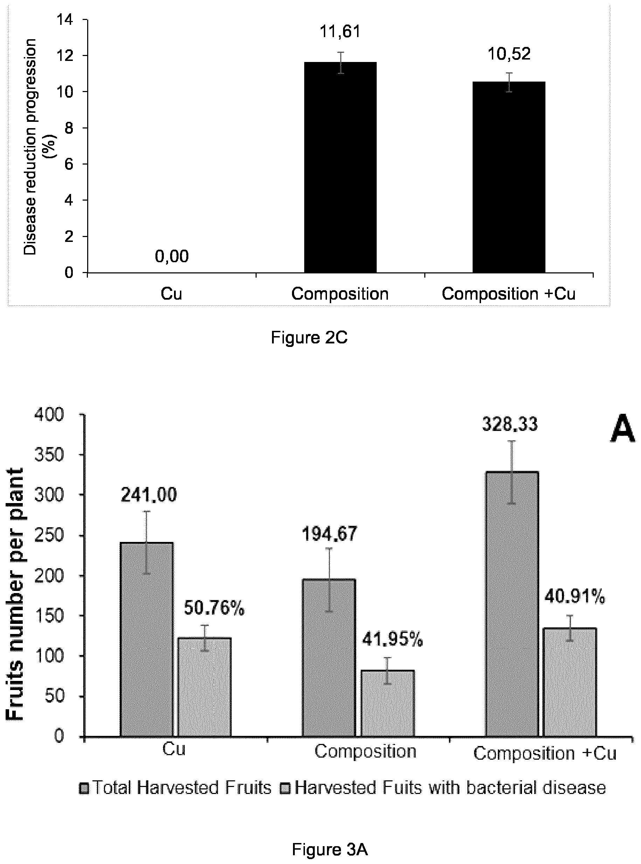

   Figures 2 (A, B, C) are graphs representing the progression and reduction curve of bacterial disease (CCK) in plants treated with the composition of the present invention: results based on an average of 90 plants per treatment.

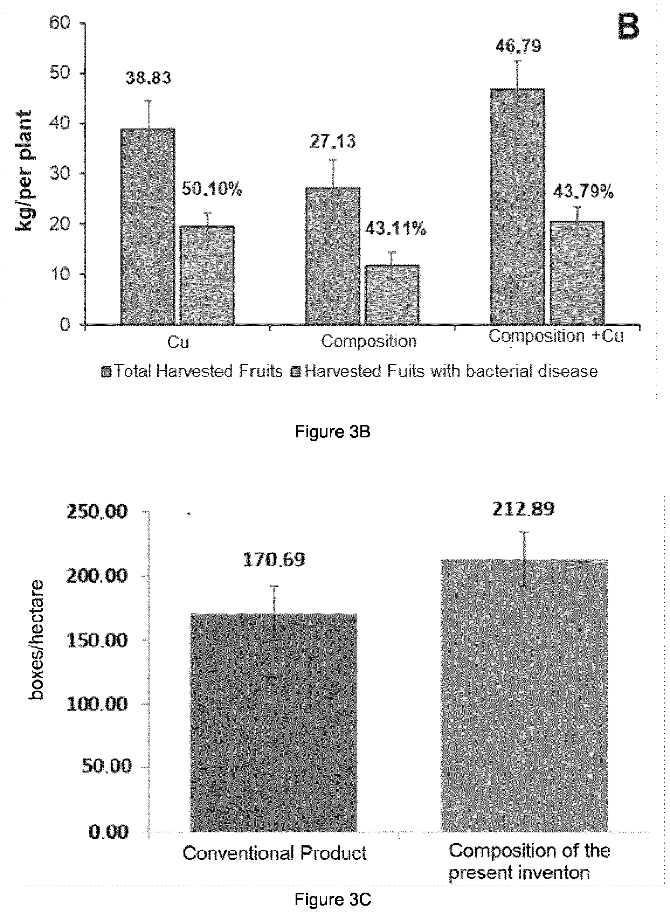

Figures 3 (A, B) are a graph that represents the total number of fruits harvested with citrus canker disease (CCK) and, among them, those that showed a symptom of disease in plants treated with the composition, compared to conventional treatment. A: The percentage refers to the relationship between symptomatic fruits and total fruits, per treatment. B: Total weight of fruits harvested and weight of fruits harvested with disease symptom, per plant. Average of 18 plants.
Figures 3 C. Results of the treatment with the composition of the present invention in plants with HLB (greening), the graph shows the fruit production of plants treated with the conventional product and with the composition of the present invention.

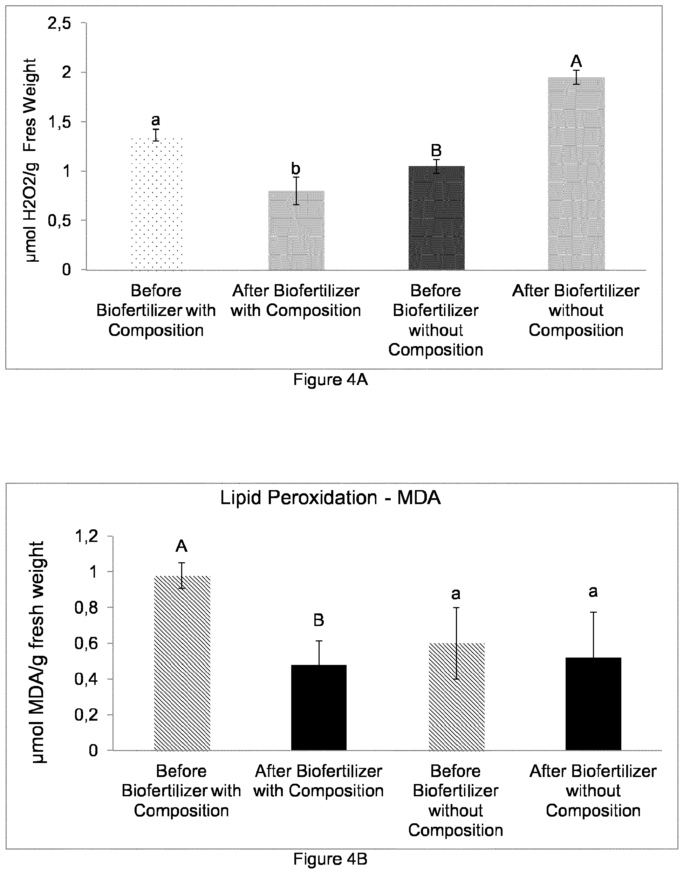

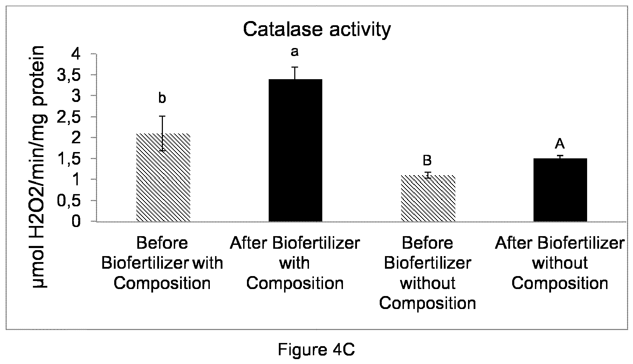

Figures 4. Results in reducing oxidative stress in plants with citrus variegated chlorosis disease (CVC), wherein:
   Figure 4A is a graph depicting the quantification of hydrogen peroxide in plants presenting CVC treated with the composition of the present invention or a common/ standard fertilizer. Black bars: refer to the beginning of treatment and gray bars: describes the results after three months of treatment.
   Figure 4B is a graph depicting the quantification of lipid peroxidation showing the malondialdehyde (MDA) concentrations in diseased plants treated with the composition of the present invention or other fertilizer. Black bars: refer to the beginning of treatment and gray bars: describes the results after three months of treatment.
   Figure 4C is a graph depicting the catalase activity (CAT) in diseased plants treated with the composition of the present invention or other fertilizer. Black bars: refer to the beginning of treatment and gray bars: describes the results after three months of treatment.

### DETAILED DESCRIPTION

Applicants specifically clarify that when an amount, concentration, or other value or parameter is given as either a range, preferred range, or a list of upper preferable values and lower preferable values, this is to be understood as specifically disclosing all ranges formed from any pair of any upper range limit or preferred value and any lower range limit or preferred value, regardless of whether ranges are separately disclosed.

Where a range of numerical values is recited herein unless otherwise stated, the range is intended to include the endpoints thereof, and all integers and fractions within the range. It is not intended that the scope of the invention be limited to the specific values recited when defining a range.

It should be further noted that the terms of "including", "comprising" or any other variants thereof intend to encompass a non-exclusive inclusion, such that a process, method, commodity or device comprising a series of elements not only comprises these elements, but also comprises other elements that are not listed, or further comprises elements that are inherent to the process, method, commodity or device. When there is no further restriction, elements defined by the statement "comprising one" do not exclude additional similar elements in a process, method, commodity, or device that comprises the defined elements.

The modifier term "about" should be considered as disclosing the range defined by the absolute values of the two endpoints.

It is to be understood that certain aspects of the disclosure which are, for clarity, described herein in the context of separate embodiments, may also be provided in combination in a single embodiment.

The embodiments in this description are progressively described, being that each embodiment focuses on differences from others, and they may be mutually referenced for identical or similar parts thereof.

The embodiments of the present disclosure are merely exemplary and are not meant to limit the present disclosure. To a person skilled in the art, the disclosed embodiments can be modified or changed in various ways. Any modification, equivalent substitution, or improvement made within the spirit and principle of the present disclosure shall be encompassed by the claims of the present disclosure.

The present inventors verified that the composition and method disclosed herein focused on agricultural research and development, developed products based on N-acetyl-cysteine, a cysteine analog widely used in human health, due to its bactericidal and antioxidant action. Experiments with this molecule and the products developed have already been studied and validated, with positive results in the control of CVC (caused by the bacterium *Xylella fastidiosa*), citrus canker (caused by the bacterium *Xanthomonas citri*) and the reduction of the bacterial titer in plants infected with *Candidatus Liberibacter asiaticus* (CLas), a bacterium that causes HLB (greening).

The first genome sequencing of a phytopathogenic bacterium was obtained and based on information, the bacteria was understood and when multiplying, causes the disease because it blocks the plant's vessels by forming a bacterial biofilm (cluster), thus preventing the flow of water and nutrients from the root to the aerial part of the plants. The solution, therefore, is to undo these biofilms, unblocking the vessels, restoring the flow of sap in the host plants.

The present disclosure provides agricultural compositions with high carbon concentration organic, chelated with amino acids, contains macronutrients in the balanced formula for proper plant nutrition. It has in its formulation special amino acids that work in the strengthening of plants, deagglomerating the bacteria colonies and, thus, promoting the release of sap. In this sense, the infected plant is re-nourished, including an increase to its defenses the bacteria attack.

The agricultural compositions provided by the present invention can decrease the bacterial titration in plants infected with bacterial diseases, reducing the symptoms, even in plants in advanced stages of infection and enabling the use of fruits for juice processing, whereas, for citrus canker, it has shown to be an alternative to the use of copper, preventing the progression of the disease.

The agricultural compositions provided by the present invention consisting of a sustainable product that reduces the premature fruit drop nourishes the plant, avoids oxidative stress, and assists in the managing of the bacteria's diseases.

Improved agricultural compositions are comprised herein. In particular embodiments, agricultural compositions for effective treatment of bacterial disease and disorders, disrupting bacterial colonies, reducing the oxidative stress and capturing the free radicals comprise N-acetyl-cysteine compounds, analogs and combinations thereof as an active ingredient, fertilizers, excipients and an agriculturally acceptable carrier, a microbicide, a bacteriophage or a possible plant defense activator.

In particular embodiments, the N-acetyl-cysteine compounds, analogs, and combinations thereof are present in a concentration range of 5 to 30% by weight of the total composition, the analogs of N-acetyl-cysteine compounds can select from DL-Homocysteine, L-cysteine methyl ester; L-cysteine ethyl ester; N-carbamoyl cysteine, cysteamine; N-(2-mercaptoisobutiril)-L-cysteine; N-(2-mercapto propionyl)-L-cysteine-A; N-(2-mercapto propionyl)-L-cysteine-B; -N-(3-mercapto propionyl)-L-cysteine; -L-cysteine ethyl ester hydrochloride; -L-cysteine methyl ester hydrochloride; N-acysteline (a salt of lysine N-acetylcysteine); N-acetylcysteine (NAC) and S-carbometil cysteine (carbocysteine).

In particular embodiments, the compositions comprise N-acetyl-cysteine compounds, analogs and combinations thereof can be between about 5 to 30% by weight, between about 2 to 40% by weight of macronutrients, between about 13 to 50% by weight of micronutrients and an agriculturally acceptable aqueous or solid particulate carrier.

The agriculturally acceptable carrier may be an aqueous carrier or a solid particulate carrier.

Suitable carriers and adjuvants may be solid or liquid and are useful ingredients included in a technology formulation, e.g. natural or regenerated mineral substances, solvents, dispersants, wetting agents, tackifiers, thickeners, binders or fertilizers.

The composition, *i.e.* the active compound and, if desired, a solid or liquid adjuvant, is prepared in a known manner, typically by intimately mixing and/or grinding the compound with extenders, e.g. solvents, solid carriers and, optionally, surface-active compounds (surfactants).

Preferred varieties of plants and trees including citrus plants include, but are not limited to all citrus plants, preferably are oranges such as sweet oranges, blood oranges, sour oranges, and lemons limes, grapefruits, mandarins, clementines, kumquat, limettas, etc.

"Plant part", as used herein, refers to seeds, roots, leaves, shoots, fruits, tubers, flowers, stem, trunk, etc.

The macronutrients used in the composition are independently selected from nitrogen, phosphorus, potassium, calcium, magnesium, sulfur, carbon, oxygen and hydrogen or any combination thereof, preferably the micronutrients are independently selected from carbon, zinc, iron, manganese, boron, chlorine, copper, molybdenum, cobalt, nickel or any combination thereof.

The fertilizers comprise algae extract, preferably algae selected from *Ascophyllum Nodosum, Lithothamnium, Ulva, Enteromorpha*, *Zostera*, *Ruppia*, *Potamogeton, Saccorhiza, Laminaria, Fucus, Codium, Palmaria, Gelidium Chondrus* and combinations thereof.

The composition optionally may comprise fulvic acid as a fertilizer. Fulvic acid is an additive with a wide range of beneficial actions in the plant. Fulvic acids are used as additives in fertilizer, specifically due to their stimulatory effects on plant growth. Due to the combination of organic components of low molecular weight, consisting of metallic cations, polysaccharides, polypeptides, aliphatic and aromatic chains of CHON, fulvic acids favor and stimulate responses equivalent to the vegetable hormones auxins, gibberellins, and cytokinins.

Besides, the composition of the present invention can, synergically, promote the adhesion at the molecular level of several essential basic nutrients, such as oxygen, carbon, hydrogen, and nitrogen.

The agricultural composition described herein may be a liquid composition or a solid composition, the liquid composition having the acid pH, and being used in the form of fertigation, spraying, or "drench". The solid composition being used in the form of powder, granular, encapsulated.

In a second embodiment, the present invention provides a method for the effective s treatment, disrupting bacterial colonies, reducing the oxidative stress and capturing the free radicals in a plant or plant part thereof, comprising applying to the plant or plant part, an effective amount of the composition described herein.

The composition is applied to soil in the form of fertigation, "drench" (flooding a small area near the plant) or applied as a fertilizer in encapsulated form, including slow absorption, in which the composition of the present invention could be absorbed by the roots and taken to the xylem of plants and then start the disintegration action of the microbial biofilm.

The composition provided by the present disclosure is a stable agricultural composition having sufficient stability to have utility as an agricultural product. The stable agricultural composition allows the storage conditions at a convenient temperature. The storage conditions refer to the period in which the composition can be stored at a given temperature with a given humidity without presenting impurity/degradation products. For example, the composition can be stored for up to 24 months and can be stored at a range of temperatures from about 0 to about 60°C, after manufactured.

The bacterial disease is selected from Huanglongbing disease (HLB) or greening, citrus variegated chlorosis disease (CVC), and citrus canker (CCK).

### EXAMPLES

The present invention is further defined in the following Examples. It should be understood that these examples are given by way of illustration of the surprising effects of the composition described herein. From the above discussion and these Examples, one skilled in the art can ascertain the essential characteristics of this invention, and without departing from the spirit and scope thereof, can make various changes and modifications to the invention to adapt it to various uses and conditions.

### Example 1 Quantification of Candidatus Liberibacter asiaticus CLas bacteria and callose reduction in plants with HLB (greening)

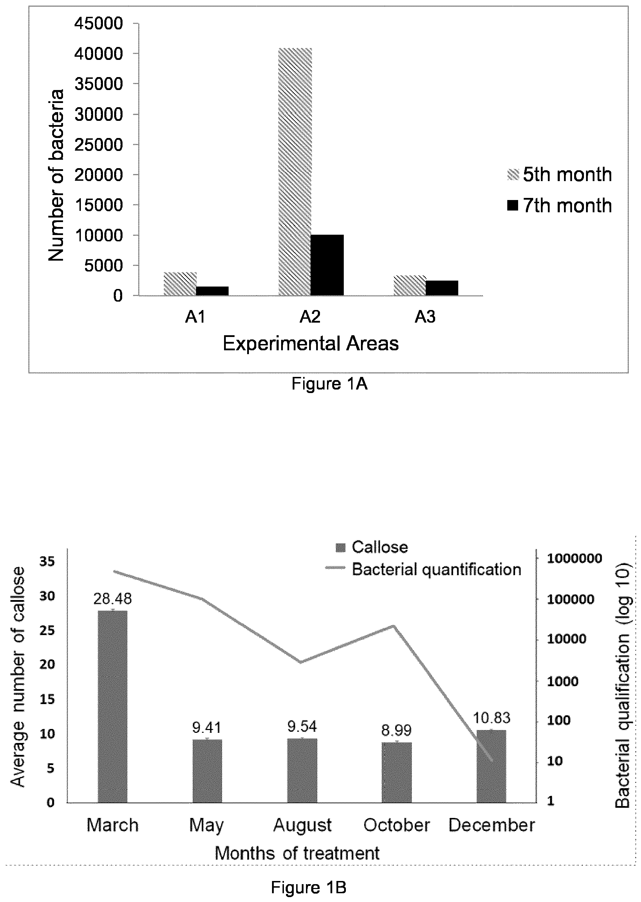

The use of the composition of the present invention in orange orchards showed a reduction in the titration of the bacterium in plants. Figure 1A represents the bacterial titration from the fifth monthly application of the product on plants treated with the composition of the present application in three areas. A1: area 1; A2: area 2; A3: area 3. In the seventh month of application of the product (orange bar), there was a decrease in bacterial titration in the three areas: in area 1 (A1) it decreased 2.5 times, in area 2 (A2) it decreased 4 times and in area 3 (A3) it decreased 1.3 times.

The Huanglongbing disease (HLB) or greening symptoms have been related by callose accumulation in the phloem plates. Therefore, the composition provided by the present invention was tested to evaluate the decrease in callose in the phloem. Figure 1B shows the decrease in bacterial population and the amount of callose.

Figure 1C shows the reduction of callose by microscopic images of cross-sections of leaf petioles treated with the composition of the present invention. The white arrows show the callose points present in the phloem vessels. It is possible to verify a decrease in callose during the study months.

### Example 2: Preventing the disease

The results obtained from the treatment with cooper (conventional) in plants with citrus canker (CCK), the treatment with the composition of the present invention, and the alternating treatment between copper + composition of the present application were compared.

In this example, it was found that the copper treatment had a greater spread of the disease (CCK) compared to other treatments containing the composition of the present application (Figure 2A). The disease progression was less in the treatment with the composition of the present application (Figure 2B) and prevented the dissemination and increase of symptoms in the plants by 11.61% (Figure 2C). Then, the alternate treatment (composition + Cu) stood out, with a 10.52% reduction in the disease (Figure 2C).

### Example 3: Fruit harvest with any less bacterial disease and the increase productivity

The following examples depict the fruit harvested and the weight thereof, regarding the treatments performed with a copper solution (conventional treatment), and with the composition of the present invention, and the mixture of copper and the composition of the present invention in plants with citrus canker.

Figure 3 (A and B) shows that the plants with citrus canker treated with the Composition of the present application had the highest number of fruits per plant have 10% less symptomatic fruits (treatment Composition and Composition +Cu) than copper treatment plants (Cu). Concerning the harvest, plants treated with the composition of the present invention plus Copper had a greater number of harvested fruits. This amount was 1.5 times greater concerning the number of fruits harvested in plants treated only with copper and 1.7 times greater for plants treated only with the composition of the present invention.

Figure 3C shows the fruit production of plants with HLB treated with the conventional product and with the composition of the present invention. This Figure demonstrates the comparison of the fruit production per hectare in plants (having a bacterial disease) that have been treated with conventional treatment and with the composition of the present invention. Therefore, it is possible to verify the increase in productivity of 42 boxes of fruits per hectare.

### Example 4: Reducing the oxidative stress

The effect of the composition disclosed herein on oxidative stress in citrus plants affected by bacterial diseases; Huanglongbing disease (HLB or greening), citrus variegated chlorosis disease (CVC) and citrus canker (CCK); was studied.

Therefore, the reduction of oxidative stress was evaluated before and after the application of the (i) biofertilizer with the composition disclosed herein and before and after the application of the (ii) biofertilizer without the composition disclosed herein.

The analyses of enzymatic activities related to oxidative stress were performed, as well as quantification of lipid peroxidation and hydrogen peroxide.

It is well known by experts in the art that, during periods of bacterial disease, the level of reactive oxygen species increases in plants, leading to a state of oxidative stress detrimental to the development and health of the plant. Hydrogen peroxide is one of the reactive oxygen species generated in response to the presence of bacterial colonies within the plant. Therefore, the accumulation of H₂O₂ can be considered as evidence of the oxidative stress suffered by the plant.

### Example 4.1: Quantification hydrogen peroxide

In this example, it was observed that plants with CVC treated with (i) biofertilizer with the composition disclosed here showed a decrease in the concentration of H₂O₂ three months after the beginning of the experiment (Figure 4A).

As already mentioned the bacterial diseases affect biochemical processes and occur an increase in electron scattering resulting in increased production of superoxide (O²⁻) and a hydroxyl group (OH⁻). Plants treated with the composition disclosed herein showed a significant reduction in H₂O2 (Figure 4A).

Figure 4A shows that the invention composition disclosed herein reduced oxidative stress due to the reduction in the amount of H₂O₂ in plants with CVC disease.

### Example 4.2: Quantification of lipid peroxidation

The level of lipid peroxidation was measured by quantifying malondialdehyde (MDA) concentrations, widely used to indicate the cellular injury.

Figure 4B shows that plants with CVC disease that received the composition disclosed herein showed reduction lipid peroxidation content (after three months) and plants that did not receive this treatment remained with high lipid peroxidation content.

### Example 4.3: Catalase Activity

To detoxify the H₂O₂, there are different mechanisms, in which they are related to the activities of Catalase (CAT) and peroxidases (del Rio, 2015).

Figure 4C shows the results of plants with CVC disease that received the composition disclosed here in comparison with those plants treated with the biofertilizer without the composition. After three months of treatment, the plants that received the composition showed greater activity of catalase, compared to the activity presented by the plants that were treated with the biofertilizer without the composition, demonstrating that, in the presence of the composition, greater activation of detoxification occurred H2O2 by this enzyme.

The foregoing description illustrates examples of the present disclosure. It is not intended to be exhaustive. Rather, it is chosen to illustrate the principles of the present disclosure and its practical application to enable one of ordinary skill in the art to utilize the present disclosure, including its various modifications that naturally follow. All modifications and variations are contemplated within the scope of the present disclosure as determined by the appended claims. Relatively apparent modifications include combining one or more features of various embodiments with features of other embodiments.

## Claims

1. An agricultural composition for effective treatment of bacterial diseases and disorders, disrupting bacterial colonies, reducing the oxidative stress and capturing the free radicals, comprising N-acetyl-cysteine compounds, analogs and combinations thereof as an active ingredient, fertilizers, excipients and an agriculturally acceptable carrier, a microbicide, a bacteriophage or a possible plant defense activator.

2. The agricultural composition according to claim 1, wherein the N-acetyl-cysteine compounds, analogs and combinations thereof are present in a concentration of 5 to 30% by weight of the total composition, the analogs of N-acetyl-cysteine compounds can be selected from DL-Homocysteine, L-cysteine methyl ester; L-cysteine ethyl ester; N-carbamoyl cysteine, cysteamine; N-(2-mercaptoisobutiril)-L-cysteine; N-(2-mercapto propionyl)-L-cysteine-A; N-(2-mercapto propionyl)-L-cysteine-B; -N-(3-mercapto propionyl)-L-cysteine; -L-cysteine ethyl ester hydrochloride; -L-cysteine methyl ester hydrochloride; N-acysteline (a salt of lysine N-acetylcysteine); N-acetylcysteine (NAC) and S-carbometil cysteine (carbocysteine).

3. The agricultural composition according to any one of claims 1 or 2, wherein the fertilizers are in the form of macronutrients and/or micronutrients, in which the macronutrients are present in a concentration of 2 to 40% by weight of the total composition and the micronutrients are present in a concentration range of 13 to 50% by weight of the total composition, preferably the macronutrients are independently selected from nitrogen, phosphorus, potassium, calcium, magnesium, sulfur, carbon, oxygen and hydrogen or any combination thereof, preferably the micronutrients are independently selected from carbon, zinc, iron, manganese, boron, chlorine, copper, molybdenum, cobalt, nickel oy any combination thereof.

4. The agricultural composition according to any one of claims 1 to 3, wherein the fertilizers comprise algae extract, preferably algae selected from *Ascophyllum Nodosum*, *Lithothamnium*, *Ulva*, *Enteromorpha*, *Zostera*, *Ruppia*, *Potamogeton, Saccorhiza, Laminaria, Fucus, Codium, Palmaria, Gelidium Chondrus* and combinations thereof, optionally the composition comprises fulvic acid.

5. The agricultural composition according to any one of claims 1 to 4, wherein the composition can be a liquid composition or a solid composition, the liquid composition having an acid pH and being used in the form of fertigation, spraying or drench having an acid pH, the solid composition being in the form of powder, granular, or encapsulated.

6. The agricultural composition according to any one of claims 1 to 5, wherein the bacterial disease is selected from Huanglongbing disease (HLB) or greening, citrus variegated chlorosis disease (CVC) and citrus canker (CCK).

7. A method for the effective treatment of bacterial diseases and disorders, disrupting bacterial colonies, reducing the oxidative stress, and capturing the free radicals in a plant or plant part thereof, comprising applying to the plant or plant part an effective amount of the composition according to any one of claims 1 to 6.

8. The method according to claim 7, wherein the composition is applied to soil in the form of either a fertigation drench (flooding a small area near the plant) or alternatively applied as a fertilizer in encapsulated form.

9. The method according to claims 7, wherein the bacterial disease is selected from Huanglongbing disease (HLB) or greening, citrus variegated chlorosis disease (CVC), and citrus canker (CCK).
